# EUROPEAN PATENT APPLICATION

(11) **EP 3 253 168 A1**
(43) Date of publication of application: **06.12.2017**
(21) Application number: 16743474.5
(22) Date of filing: 28.01.2016
(51) Int. Cl.: H04W 74/08, H04W 72/08, H04W 72/12

(54) **BASE STATION AND USER DEVICE**

(30) Priority: 29.01.2015 JP 2015015012
(71) Applicant: NTT DOCOMO, INC., Chiyoda-ku Tokyo 100-6150 (JP)
(72) Inventor: UCHINO, Tooru, Tokyo 100-6150 (JP); TAKEDA, Kazuki, Tokyo 100-6150 (JP); HARADA, Hiroki, Tokyo 100-6150 (JP)
(74) Representative: Hoffmann Eitle
(86) International application number: PCT/JP2016/052496
(87) International publication number: WO 2016/121871

(57) **Abstract**

Techniques are disclosed for implementing LBT in coordinated communication for inter-cell interference control. One aspect of the present invention relates to a base station, comprising: a communication control unit configured to schedule radio resources of a cell for user equipment; and a frequency usage detection unit configured to perform Listen Before Talk (LBT) in a limited partial frequency band corresponding to the scheduled radio resources in a whole frequency band of the cell, wherein if it is determined that the partial frequency band is not used, the communication control unit performs downlink transmission to the user equipment.

## Description

### TECHNICAL FIELD

The present invention relates to a radio communication system.

### BACKGROUND ART

In current LTE (Long Term Evolution) systems, licensed bands assigned to communication operators are used for radio communication. Popularization of sophisticated user equipment (UE), such as smartphones and tablets, drastically increases user traffic. In order to accommodate the increasing user traffic, additional frequency bands are required, but there are a limited amount of licensed bands. Accordingly, it is being discussed that frequency bands may be expanded in the LTE systems by using available unlicensed bands other than the licensed bands. One example of such unlicensed bands includes bands for use in WiFi (registered trademark) and so on.

In the unlicensed band, if it is detected that another entity, such as another user equipment or a base station (evolved NodeB: eNB), is presently communicating in the frequency band, the user equipment is prohibited from communicating in the unlicensed band. Accordingly, a transmitter performs Listen Before Talk (LBT) before transmission. In the LBT, the transmitter searches a whole frequency band of interest to determine whether another transmitter (such as an eNB, a LAA (Licensed Assisted Access)-UE and a WiFi device) is communicating in the frequency band and performs transmission in the frequency band only if there is no communication therein. On the other hand, if another transmitter is using even a portion of the frequency band, that is, if it is detected that reception power from another transmitter exceeds a threshold, the transmitter stops its own transmission (LBT: negative).

### Prior Art Document

### [Non-Patent Document]

Non-Patent Document 1: RP-131701

### SUMMARY OF INVENTION

### [PROBLEM TO BE SOLVED BY THE INVENTION]

In the existing LTE, an ICIC (Inter-Cell Interference Coordination) technique can be used to improve throughput by avoiding interference even in an identical frequency through orthogonalization of radio resources among user equipments. However, according to the LBT, if even a portion of a frequency band of interest is being presently used, the LBT determination result would be negative, and accordingly the LBT cannot be applied in the ICIC.

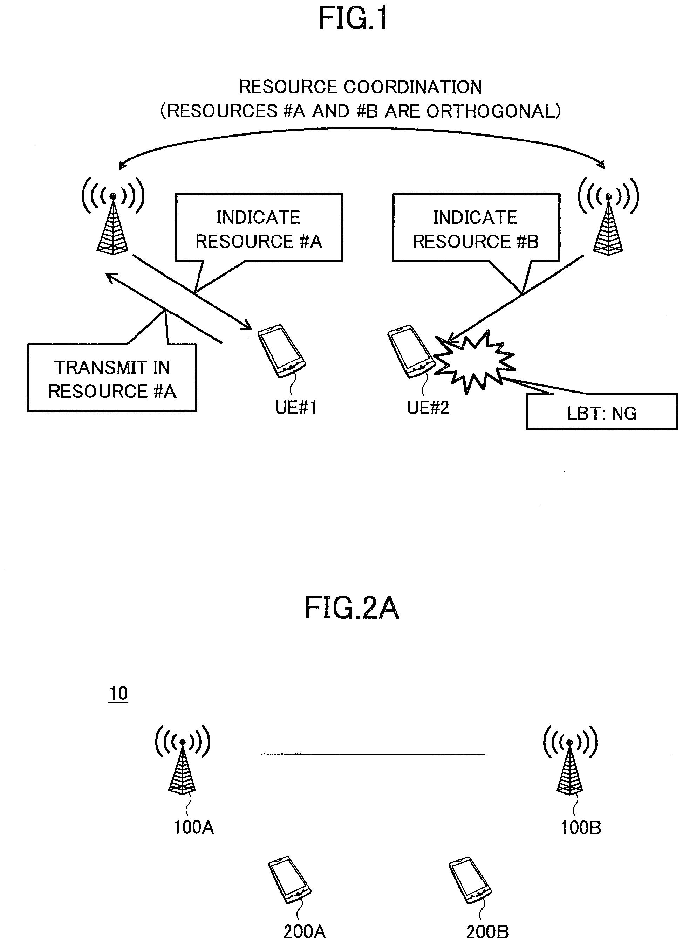

For example, in cases where mutually orthogonal radio resources are scheduled between two base stations in a coordinated manner, the LBT determination result will be negative due to transmission of one of the base stations in the coordinated communication, which may disable transmission of the other. Specifically, as illustrated in FIG. 1, it is assumed that mutually orthogonal radio resources #A and #B are scheduled for user equipments UE#1 and UE#2, respectively, in a coordinated manner. In this case, as illustrated, the LBT determination result is OK for communication between the user equipment UE#1 and the base station eNB#1, and accordingly the communication between the user equipment UE#1 and the base station eNB#1 using the radio resource #A is enabled. On the other hand, the LBT determination result is negative for communication between the user equipment UE#2 and the base station eNB#2 due to the communication between the user equipment UE#1 and the base station eNB#1, and accordingly the communication between the user equipment UE#2 and the base station eNB#2 using the radio resource #B is disabled. The coordinated communication in accordance with the inter-cell interference control can be implemented through orthogonalization of the radio resources without mutual interference. However, the coordinated communication cannot be performed, because the LBT determination is negative. Although the LBT problem has been described in conjunction with resource coordination among base stations in the illustrated example, similar problem may also arise in resource coordination among cells in a single base station.

Accordingly, in light of the above-stated problem, an object of the present invention is to provide techniques for implementing the LBT in coordinated communication with the inter-cell interference control.

### [MEANS FOR SOLVING THE PROBLEM]

In order to achieve the above object, one aspect of the present invention relates to a base station, comprising: a communication control unit configured to schedule radio resources of a cell for user equipment; and a frequency usage detection unit configured to perform Listen Before Talk (LBT) in a limited partial frequency band corresponding to the scheduled radio resources in a whole frequency band of the cell, wherein if it is determined that the partial frequency band is not used, the communication control unit performs downlink transmission to the user equipment.

Another aspect of the present invention relates to user equipment, comprising: a transmission and reception unit configured to use scheduled radio resources to perform transmission and reception to/from a base station via a cell; and a frequency usage detection unit configured to perform LBT (Listen Before Talk) in a limited partial frequency band corresponding to radio resources targeted for the LBT for uplink coordinated communication indicated from the base station in a whole frequency band of the cell, wherein if it is determined that the partial frequency band is not used, the transmission and reception unit performs uplink transmission to the base station.

Another aspect of the present invention relates to a base station, comprising: a communication control unit configured to schedule radio resources of a cell for user equipment; and a frequency usage detection unit configured to perform LBT (Listen Before Talk) in a frequency band of the cell, wherein if the frequency usage detection unit detects downlink transmission associated with coordinated communication, the communication control unit performs downlink transmission regardless of a detection result of the LBT.

Another aspect of the present invention relates to user equipment, comprising: a transmission and reception unit configured to use scheduled radio resources to perform transmission and reception to/from a base station via a cell; and a frequency usage detection unit configured to perform LBT (Listen Before Talk) in a frequency band of the cell, wherein if the frequency usage detection unit detects uplink transmission associated with coordinated communication, the transmission and reception unit performs the uplink transmission regardless of a detection result of the LBT.

### [ADVANTAGE OF THE INVENTION]

According to the present invention, the LBT can be implemented in coordinated communication with the inter-cell interference control.

### BRIEF DESCRIPTION OF DRAWINGS

FIG. 1 is a schematic diagram for illustrating exemplary disabled transmission due to LBT in inter-base station coordinated communication;
FIG. 2A is a schematic diagram for illustrating a radio communication system according to one embodiment of the present invention;
FIG. 2B is a block diagram for illustrating a hardware arrangement of a base station according to one embodiment of the present invention;
FIG. 2C is a block diagram for illustrating a hardware arrangement of user equipment according to one embodiment of the present invention;
FIG. 3 is a block diagram for illustrating a functional arrangement of a base station according to one embodiment of the present invention; and
FIG. 4 is a block diagram for illustrating a functional arrangement of user equipment according to one embodiment of the present invention.

### EMBODIMENTS OF THE INVENTION

Embodiments of the present invention are described below with reference to the drawings.

In embodiments as stated below, a transmitter performing Listen Before Talk (LBT) before uplink transmission is disclosed. Summarizing the present invention, the transmitter performs the LBT in a limited partial frequency band targeted for the LBT in a whole frequency band of a cell and performs transmission depending on the LBT determination result for the partial frequency band. Also, the transmitter performs the LBT in a frequency band of a cell, but it excludes the LBT determination result of transmission associated with coordinated communication and performs the transmission depending on the other LBT determination results. Accordingly, the situation where transmission scheduled in the coordinated communication for inter-cell interference control is disabled as a result of the LBT determination result being negative due to other transmissions associated with the coordinated communication can be avoided.

A radio communication system according to one embodiment of the present invention is described with reference to FIG. 2A. FIG. 2A is a schematic diagram for illustrating a radio communication system according to one embodiment of the present invention.

As illustrated in FIG. 2A, a radio communication system 10 has base stations 100A, 100B and user equipments 200A, 200B (which may be collectively referred to as the base station 100 and the user equipment 200, respectively, hereinafter). Typically, the radio communication system 10 may be an LTE system or an LTE-Advanced system. In the illustrated embodiment, only the two base stations 100 are illustrated, but a large number of base stations 100 are disposed to cover a service area of the radio communication system 10.

The base station 100 establishes a radio connection to the user equipment 200 to transmit downlink (DL) packets received from an upper station communicatively connected on a core network (not shown) to the user equipment 200 as well as transmit uplink (UL) packets received from the user equipment 200 to the upper station. In this embodiment, the base station 100 has an inter-cell interference coordination (ICIC) function and can communicate with the user equipment 200 in a coordinated manner with an adjacent base station 100 (inter-base station coordinated communication) as well as using multiple cells of the base station 100 (inter-cell coordinated communication). For example, in the inter-base station coordinated communication, the base stations 100A, 100B schedule mutually orthogonal radio resources for the user equipments 200A, 200B located at the cell edge to control interference among respective cells having an identical frequency. Also, in the inter-cell coordinated communication, the base station 100 assigns radio resources in respective cells to control interference among the multiple cells served by the base station 100.

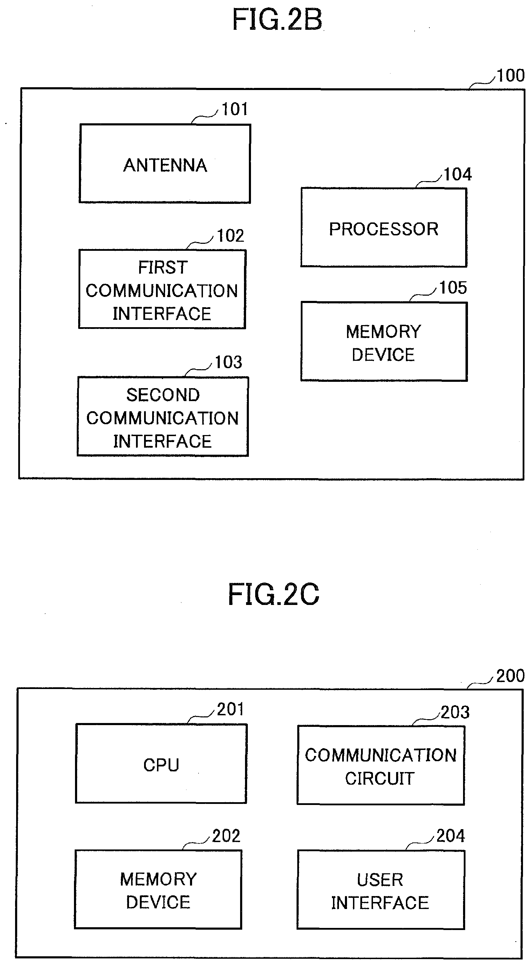

As illustrated in FIG. 2B, the base station 100 is typically arranged with hardware resources such as an antenna 101 for transmitting and receiving radio signals to/from the user equipment 200, a first communication interface 102 (for example, an X2 interface) for communicating with an adjacent base station 100, a second communication interface 103 (for example, an S1 interface) for communicating with the core network, a processor 104 and a circuit for processing signals transmitted and received to/from the user equipment 200 and a memory device 105. Functions and operations of the base station 100 as stated below may be implemented by the processor 104 processing and running data and programs stored in the memory device 105. However, the base station 100 is not limited to the above-stated hardware configuration and may have any other appropriate hardware configuration.

The user equipment 200 uses scheduled radio resources to perform radio communication with the base station 100 via a cell served by the base station 100. Typically, as illustrated, the user equipment 200 may be any appropriate information processing device with a radio communication function such as a smartphone, a mobile phone, a tablet, a mobile router and a wearable terminal. As illustrated in FIG. 2C, the user equipment 200 is arranged with a CPU (Central Processing Unit) 201 such as a processor, a memory device 202 such as a RAM (Random Access Memory) and a flash memory, a radio communication circuit 203 for transmitting and receiving radio signals to/from the base station 100, a user interface 204 such as an input/output device and a peripheral device and so on. For example, functions and operations of the user equipment 200 as stated below may be implemented by the CPU 201 processing and running data and programs stored in the memory device 202. However, the user equipment 200 is not limited to the above-stated hardware configuration and may be arranged with circuits for implementing one or more of operations as stated below.

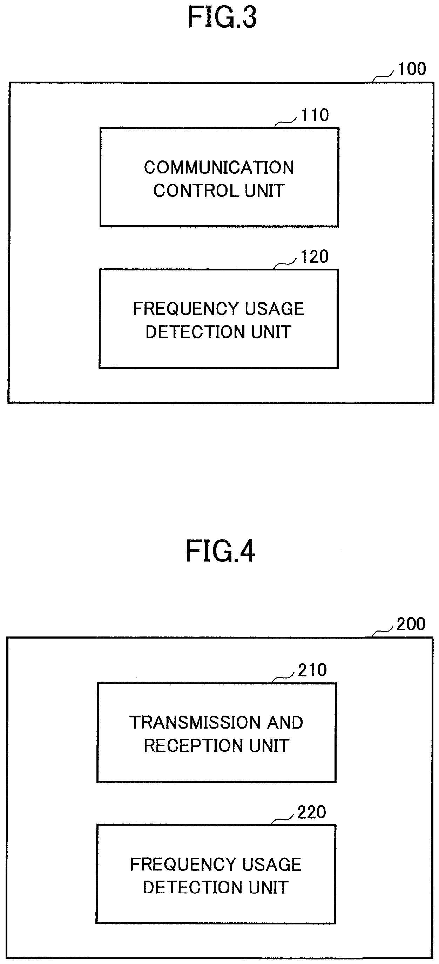

Next, the base station and the user equipment according to embodiments of the present invention are described with reference to FIGS. 3-4. In the first embodiment of the present invention, a transmitter performs the LBT by limiting a frequency band targeted for the LBT to a partial frequency band in a whole frequency band of a cell. In the second embodiment of the present invention, on the other hand, a transmitter performs the LBT in a frequency band of a cell, but an LBT determination result associated with coordinated communication is excluded. Any of the first and second embodiments can be applied to both downlink transmission and uplink transmission, and it could be understood that the transmitter serves as the base station 100 in the downlink transmission and serves as the user equipment 200 in the uplink transmission.

As stated below, the base station 100 and the user equipment 200 according to the first and second embodiments have the same components, although they operate in different manners. Specifically, the base station 100 has a communication control unit 110 and a frequency usage detection unit 120, and the user equipment 200 has a transmission and reception unit 210 and a frequency usage detection unit 220.

At the outset, communication control operations for downlink transmission according to the first embodiment are described. In the downlink transmission according to the first embodiment, the base station 100 limits a frequency band targeted for the LBT to a partial frequency band of the whole frequency band of a cell to avoid the situation where the LBT determination result becomes negative due to downlink transmission using other frequency band portions by other base stations 100 or other cells associated with coordinated communication.

The communication control unit 110 schedules radio resources of a cell for the user equipment 200. Specifically, the communication control unit 110 transmits and receives various control signals and data signals to/from the user equipment 200 via the cell as well as uses an inter-cell interference control (ICIC) function to perform inter-base station coordinated communication with an adjacent base station 100 and/or inter-cell coordinated communication using multiple cells of the base station 100. For example, in the inter-base station coordinated communication, the base stations 100A, 100B schedule mutually orthogonal radio resources for the user equipments 200A, 200B to control interference among respective cells having an identical frequency. Also, in the inter-cell coordinated communication, the base station 100 adjusts assignment of radio resources in respective cells to control interference among the multiple cells served by the base station 100.

In the base station 100 according to the first embodiment, if the frequency usage detection unit 120 as stated below determines that a partial frequency band corresponding to scheduled radio resources in the whole frequency band of the cell is not used, the communication control unit 110 performs downlink transmission to the user equipment 200. In other words, in contrast with the conventional LBT where the whole frequency band of the cell is searched, according to the first embodiment, a frequency band targeted for the LBT is limited to the partial frequency band in the whole frequency band of the cell, and the situation where the LBT determination result will be negative as a result of downlink transmission in other frequency band portions for use of other base stations 100 or cells associated with the coordinated communication is avoided.

The frequency usage detection unit 120 performs the LBT in a limited partial frequency band corresponding to the scheduled radio resources in the whole frequency band of the cell. Specifically, the frequency usage detection unit 120 limits a frequency band targeted for the LBT to a partial frequency band utilized by the communication control unit 110 for downlink transmission in the whole frequency band of the cell and performs the LBT on the limited partial frequency band. The terminology "scheduling" used herein is not limited to dynamic resource assignment by the base station 100 but may mean that the base station 100 assigns radio resources to the user equipment 200 beforehand. In this case, the user equipment 200 receives resource configuration information indicative of the assignment from the base station 100 and performs transmission in accordance with the resource configuration information. For example, the resource configuration information may indicate periodic assignment of radio resources.

Here, the partial frequency band may be specified with respect to the frequency direction and the time direction. In one embodiment, the frequency usage detection unit 120 may indicate a resource block or a group of resource blocks as the partial frequency band. For example, if radio resources scheduled by the communication control unit 110 are RB#i to RB#j, the frequency usage detection unit 120 performs the LBT in RB#i to RB#j. Accordingly, it is possible to avoid the situation where downlink transmission using RB#i to RB#j is disabled as a result of the LBT determination result being negative due to downlink transmission using RB#k to RB#l, which are scheduled for other base stations 100 or other cells in coordinated communication and are orthogonal to RB#i to RB#j, for example. Here, the specified resource block or group of resource blocks may be uniform over cells or component carriers or may be configured individually.

Next, communication control operations for uplink transmission according to the first embodiment are described. In the uplink transmission according to the first embodiment, the user equipment 200 limits a frequency band targeted for the LBT to a partial frequency band in the whole frequency band of a cell to avoid the situation where the LBT determination result becomes negative due to uplink transmission using other frequency band portions by other user equipments 200 associated with coordinated communication.

The transmission and reception unit 210 uses scheduled radio resources to perform transmission and reception to/from the base station 100 via a cell. Specifically, the transmission and reception unit 210 uses the scheduled radio resources to transmit and receive various radio channels such as uplink/downlink control channels and uplink/downlink data channels to/from the base station 100. Furthermore, when the frequency usage detection unit 220 determines that a partial frequency band corresponding to radio resources targeted for the LBT for uplink coordinated communication indicated from the base station 100 in the whole frequency band of a cell is not used, the transmission and reception unit 210 performs uplink transmission to the base station 100. In other words, in contrast with the conventional LBT where the whole frequency band of the cell is searched, according to the first embodiment, a frequency band targeted for the LBT is limited to the partial frequency band in the whole frequency band of the cell, and the situation where the LBT determination result is negative as a result of downlink transmission in other frequency band portions used by other user equipments 200 associated with the coordinated communication is avoided.

In one embodiment, the communication control unit 110 in the base station 100 may indicate radio resources targeted for the LBT in uplink coordinated communication to the user equipment 200. Specifically, the transmission and reception unit 210 may receive any signal such as an RRC (Radio Resource Control) signal, a MAC (Medium Access Control) signal or the like. The partial frequency band corresponding to radio resources targeted for the LBT may be specified with respect to the frequency direction and the time direction, similar to the downlink transmission. In one embodiment, the partial frequency band may be indicated as a resource block or a group of resource blocks.

The frequency usage detection unit 220 performs the LBT in a limited partial frequency band corresponding to radio resources targeted for the LBT in the whole frequency band of the cell for uplink coordinated communication indicated from the base station 100. Specifically, when the partial frequency band corresponding to the radio resources targeted for the LBT for uplink transmission is indicated from the base station 200, the frequency usage detection unit 220 performs the LBT in the partial frequency band. If the LBT determination result is OK, the transmission and reception unit 210 performs the uplink transmission, and otherwise if the LBT determination result is negative, the transmission and reception unit 210 disables the uplink transmission.

The present invention is not limited to it, and for example, if the partial frequency band is not indicated from the base station 100, the frequency usage detection unit 220 may perform the LBT in a predefined partial frequency band such as a predefined resource block or perform the LBT on the whole frequency band of a cell.

In one embodiment, the communication control unit 110 in the base station 100 may indicate a reception power threshold for use in the LBT determination together with the partial frequency band to the user equipment 200. For example, the communication control unit 110 may determine the reception power threshold for use in determining the LBT for the uplink coordinated communication corresponding to an amount of radio resources scheduled for the user equipment 200 and further indicate the determined reception power threshold to the user equipment 200. In this case, the reception power threshold for use in the LBT determination may be determined in proportion to the number of resource blocks scheduled for the user equipment 200. In other words, as more resource blocks are scheduled, a higher reception power threshold may be indicated. In this case, the frequency usage detection unit 220 uses the indicated reception power threshold to perform the LBT.

Next, communication control operations for downlink transmission according to the second embodiment are described. In the downlink transmission according to the second embodiment, the base station 100 excludes an LBT determination result for downlink transmission associated with coordinated communication from LBT determination results for a frequency band of a cell to avoid the situation where the downlink transmission is disabled as a result of detection of downlink transmission for other base stations 100 or other cells associated with the coordinated communication.

The communication control unit 110 schedules radio resources of a cell for user equipment 200. Specifically, the communication control unit 110 transmits and receives various control signals and data signals to/from the user equipment 200 via the cell as well as uses an inter-cell interference control (ICIC) function to perform inter-base station coordinated communication with an adjacent base station 100 and/or inter-cell coordinated communication using multiple cells of the base station 100. For example, in the inter-base station coordinated communication, the base stations 100A, 100B schedule mutually orthogonal radio resources for the user equipments 200A, 200B to control interference among respective cells having an identical frequency. Also, in the inter-cell coordinated communication, the base station 100 assigns radio resources in respective cells to control interference among the multiple cells served by the base station 100.

The frequency usage detection unit 120 performs the LBT in a frequency band of the cell. Specifically, the frequency usage detection unit 120 searches the frequency band in the cell and upon detecting that reception power exceeds a predetermined threshold in at least a portion of the frequency band, determines that the frequency band is used (LBT: negative). On the other hand, if the reception threshold is lower than or equal to the predetermined threshold anywhere in the frequency band, the frequency usage detection unit 120 determines that the frequency band is not used for other base stations 100 or other cells (LBT: OK).

In the base station 100 according to the second embodiment, if the frequency usage detection unit 120 detects downlink transmission associated with coordinated communication, the communication control unit 110 performs downlink transmission in the exclusion to the LBT detection result. Specifically, even in the case where the frequency usage detection unit 120 as stated below determines that the frequency band of the cell is used (LBT: negative), if the downlink transmission in the used frequency band is downlink transmission for other base stations 100 or other cells associated with the coordinated communication, the communication control unit 110 performs the downlink transmission regardless of the LBT determination result. In other words, in the case where other downlink transmission is performed in the frequency band of the cell, such as the case where reception power is higher than or equal to a reception power threshold in the frequency band of the cell, the LBT determination is made in the exclusion to the LBT determination result for downlink transmission associated with the coordinated communication instead of determining the LBT determination result as being negative without exception.

In one embodiment, the communication control unit 110 may have a uniform user equipment identifier among cells or base stations 100 associated with the coordinated communication and a cell identifier of a cell associated with the coordinated communication, and if the frequency usage detection unit 120 detects downlink transmission associated with the coordinated communication, the communication control unit 110 may use the user equipment identifier and the cell identifier of another cell to decode data associated with the detected downlink transmission and perform downlink transmission regardless of a detection result of the LBT upon the decoding being successful. Specifically, in the inter-cell coordinated communication, the communication control unit 110 has the same user equipment identifier among the cells and cell identifiers of the respective cells. Also, in the inter-base station coordinated communication, the communication control unit 110 shares the same user equipment identifier among the base stations 100 and the respective cell identifiers of the base stations 100. For example, the user equipment identifier may be a uniform RNTI (Radio Network Temporary ID) among cells or base stations 100 associated with the coordinated communication, and the cell identifier may be a PCI (Physical Cell Identity) of a cell associated with the coordinated communication.

In LTE standard, the communication control unit 110 uses the RNTI and the PCT of its own cell for scrambling a PDSCH (Physical Downlink Shared Channel). Accordingly, even if the LBT determination result is negative at downlink transmission, the communication control unit 110 uses the shared RNTI and PCIs of other cells to decode data associated with the downlink transmission detected as being negative for the LBT and if the decoding is successful, such as if CRC (Cyclic Redundancy Check) is OK, considers the detected downlink transmission to be associated with the coordinated communication to perform downlink transmission.

Next, communication control operations for uplink transmission according to the second embodiment are described. In the uplink transmission according to the second embodiment, even if uplink transmission associated with the user equipment 200 is detected in the LBT, the user equipment 200 performs the uplink transmission regardless of a detection result of the LBT.

The transmission and reception unit 210 uses scheduled radio resources to perform transmission and reception to/from the base station 100 via a cell. Specifically, the transmission and reception unit 210 transmits and receives various radio channels such as uplink/downlink control channels and uplink/downlink data channels to/from the base station 100. Furthermore, if the frequency usage detection unit 220 detects uplink transmission associated with coordinated communication, the transmission and reception unit 210 performs the uplink transmission in the exclusion to a detection result of the LBT. Specifically, even in the case where the frequency usage detection unit 220 as stated below determines that the frequency band of the cell is used (LBT: negative), if the uplink transmission in the used frequency band is uplink transmission for other user equipments 200 associated with the coordinated communication, the transmission and reception unit 210 performs the uplink transmission regardless of the LBT determination result. In other words, in the case where other uplink transmission is performed in the frequency band of the cell, such as the case where reception power is higher than or equal to a reception power threshold in the frequency band of the cell, the LBT determination is made in the exclusion to the LBT determination result for uplink transmission associated with the coordinated communication instead of determining the LBT determination result as being negative without exception.

The frequency usage detection unit 220 performs the LBT in the frequency band of the cell. Specifically, the frequency usage detection unit 220 searches the whole frequency band of the cell and upon detecting that the reception power exceeds a predetermined threshold in at least a portion of the frequency band, determines that the frequency band is used (LBT: negative). On the other hand, if the reception power is lower than or equal to the predetermined threshold anywhere in the frequency band, the frequency usage detection unit 220 determines that the frequency band is not used by any other user equipment 100 (LBT: OK).

In the user equipment 200 according to the second embodiment, if the frequency usage detection unit 220 detects uplink transmission associated with coordinated communication, the transmission and reception unit 210 performs uplink transmission regardless of a detection result of the LBT. Specifically, even in the case where the frequency usage detection unit 220 determines that the frequency band of the cell is used (LBT: negative), if the uplink transmission in the used frequency band is uplink transmission for other user equipments 200 associated with the coordinated communication, the transmission and reception unit 210 performs the uplink transmission regardless of the LBT determination result. In other words, in the case where other uplink transmission is performed in the frequency band of the cell, such as the case where reception power is higher than or equal to a reception power threshold in the frequency band of the cell, the LBT determination is made in the exclusion to the LBT determination result for uplink transmission associated with the coordinated communication instead of determining the LBT determination result as being negative without exception.

In one embodiment, the communication control unit 110 in the base station 100 may indicate a uniform user equipment identifier among cells or base stations 100 associated with the coordinated communication and a cell identifier of a cell associated with the coordinated communication to the user equipment 200. Specifically, the transmission and reception unit 210 may receive the indication in any signal such as an RRC (Radio Resource Control) signal, a MAC (Medium Access Control) signal or the like. In this case, the transmission and reception unit 210 has the uniform user equipment identifier among cells or base stations 100 associated with the coordinated communication indicated from the base station and the cell identifiers of the cells associated with the coordinated communication, and if the frequency usage detection unit 220 detects uplink transmission associated with the coordinated communication, the transmission and reception unit 210 uses the user equipment identifier and the cell identifiers of other cells to decode data associated with the detected uplink transmission. If the decoding is successful, the transmission and reception unit 210 may perform uplink transmission regardless of the LBT detection result.

In LTE standard, the user equipment 200 uses an RNTI for scrambling a PUSCH (Physical Uplink Shared Channel in uplink transmission in a LAA (Licensed Assisted Access) band. Then, the transmission and reception unit 210 multiplexes a C-RNTI (Cell-Radio Network Temporary Identity) MAC CE (Control Element) into a MAC PDU (Packet Data Unit) of transmission data so that the base station 100 can determine in decoding which user equipment 200 has transmitted the PUSCH.

Here, operations associated with decoding by the above-stated transmission and reception unit 210 may be implemented only if they are indicated from the base station 100. For example, the transmission and reception unit 210 may receive the indication in any signal such as an RRC signal, a MAC signal or the like or may be indicated in an uplink scheduling grant.

Although the embodiments of the present invention have been described in detail, the present invention is not limited to the above-stated specific embodiments, and various modifications and variations can be made within the spirit of the present invention as recited in claims.

This international patent application claims the benefit of priority based on Japanese Priority Application No. 2015-015012 filed on January 29, 2015, the entire contents of which are hereby incorporated by reference.

### LIST OF REFERENCE SYMBOLS

10: radio communication system
100: base station
110: communication control unit
120: frequency usage detection unit
200: user equipment
210: transmission and reception unit
220: frequency usage detection unit

## Claims

1. A base station, comprising:
a communication control unit configured to schedule radio resources of a cell for user equipment; and
a frequency usage detection unit configured to perform Listen Before Talk (LBT) in a limited partial frequency band corresponding to the scheduled radio resources in a whole frequency band of the cell,
wherein if it is determined that the partial frequency band is not used, the communication control unit performs downlink transmission to the user equipment.

2. The base station as claimed in claim 1, wherein the frequency usage detection unit indicates a resource block or a group of resource blocks as the partial frequency band.

3. The base station as claimed in claim 1 or 2, wherein the communication control unit indicates radio resources targeted for the LBT for uplink coordinated communication to the user equipment.

4. The base station as claimed in claim 3, wherein the communication control unit determines a reception power threshold for use in determining the LBT for the uplink coordinated communication corresponding to an amount of radio resources scheduled for the user equipment and further indicates the determined reception power threshold to the user equipment.

5. User equipment, comprising:
a transmission and reception unit configured to use scheduled radio resources to perform transmission and reception to/from a base station via a cell; and
a frequency usage detection unit configured to perform LBT (Listen Before Talk) in a limited partial frequency band corresponding to radio resources targeted for the LBT for uplink coordinated communication indicated from the base station in a whole frequency band of the cell,
wherein if it is determined that the partial frequency band is not used, the transmission and reception unit performs uplink transmission to the base station.

6. A base station, comprising:
a communication control unit configured to schedule radio resources of a cell for user equipment; and
a frequency usage detection unit configured to perform LBT (Listen Before Talk) in a frequency band of the cell,
wherein if the frequency usage detection unit detects downlink transmission associated with coordinated communication, the communication control unit performs downlink transmission regardless of a detection result of the LBT.

7. The base station as claimed in claim 6, wherein the communication control unit has a uniform user equipment identifier among cells or base stations associated with the coordinated communication and a cell identifier of a cell associated with the coordinated communication, and if the frequency usage detection unit detects downlink transmission associated with the coordinated communication, the communication control unit uses the user equipment identifier and the cell identifier of another cell to decode data associated with the detected downlink transmission and performs downlink transmission regardless of a detection result of the LBT upon the decoding being successful.

8. The base station as claimed in claim 6 or 7, wherein the communication control unit indicates a uniform user equipment identifier among cells or base stations associated with the coordinated communication and a cell identifier of a cell associated with the coordinated communication to the user equipment.

9. User equipment, comprising:
a transmission and reception unit configured to use scheduled radio resources to perform transmission and reception to/from a base station via a cell; and
a frequency usage detection unit configured to perform LBT (Listen Before Talk) in a frequency band of the cell,
wherein if the frequency usage detection unit detects uplink transmission associated with coordinated communication, the transmission and reception unit performs the uplink transmission regardless of a detection result of the LBT.

10. The user equipment as claimed in claim 9, wherein the transmission and reception unit has a uniform user equipment identifier among cells or base stations associated with the coordinated communication indicated from the base station and a cell identifier of a cell associated with the coordinated communication, and if the frequency usage detection unit detects the uplink transmission associated with the coordinated communication, the transmission and reception unit uses the user equipment identifier and the cell identifier of another cell to decode data associated with the detected uplink transmission and performs the uplink transmission regardless of a detection result of the LBT upon the decoding being successful.
